**Europäisches Patentamt**

**European Patent Office**

**Office européen des brevets**

(19)

(11) Veröffentlichungsnummer : **0 405 272 B1**

# (12) EUROPÄISCHE PATENTSCHRIFT

(45) Veröffentlichungstag der Patentschrift :
**23.12.92 Patentblatt 92/52**

(51) Int. Cl.$^5$ : **C06B 31/28, C01C 1/18**

(21) Anmeldenummer : **90111401.7**

(22) Anmeldetag : **16.06.90**

(54) **Verfahren zur Herstellung von phasenstabilisiertem Ammoniumnitrat.**

(30) Priorität : **28.06.89 DE 3921098**

(43) Veröffentlichungstag der Anmeldung :
**02.01.91 Patentblatt 91/01**

(45) Bekanntmachung des Hinweises auf die
Patenterteilung :
**23.12.92 Patentblatt 92/52**

(84) Benannte Vertragsstaaten :
**DE FR GB IT NL**

(56) Entgegenhaltungen :
**DE-A- 2 125 755**
**DE-C- 3 642 850**
**US-A- 3 388 014**

(73) Patentinhaber :
**FRAUNHOFER-GESELLSCHAFT ZUR**
**FÖRDERUNG DER ANGEWANDTEN**
**FORSCHUNG E.V.**
**Leonrodstrasse 54**
**W-8000 München 19 (DE)**

(72) Erfinder : **Engel, Walter, Dr.**
**Frühlingstr. 21**
**W-7507 Wöschbach (DE)**
Erfinder : **Eisenreich, Norbert, Dr.**
**Wordenwerren 10**
**W-7507 Pfinztal 2 (DE)**
Erfinder : **Thiel, Klaus-Dieter, Dr.**
**Strählerweg 131**
**W-7500 Karlsruhe 41 (DE)**

(74) Vertreter : **Dr.-Ing. Hans Lichti Dipl.-Ing. Heiner**
**Lichti Dipl.-Phys. Dr. Jost Lempert**
**Postfach 41 07 60 Bergwaldstrasse 1**
**W-7500 Karlsruhe 41 (DE)**

**Beschreibung**

Die Erfindung betrifft ein Verfahren zur Herstellung von phasenstabilisiertem Ammoniumnitrat (AN) durch Einbau eines Diamminkomplexes von Ni oder Cu in das AN-Gitter, wobei der Diamminkomplex durch Umsetzen des Metalloxids mit AN erhalten, mit einem Anteil bis 10 % mit weiterem AN gemischt und aufgeschmolzen, homogenisiert und anschließend in den festen Zustand überführt wird.

Ammoniumnitrat wird als Oxidator in Treib- und Explosivstoffen eingesetzt, hat jedoch den Nachteil, daß es in Abhängigkeit von der Temperatur in mehreren Modifikationen auftritt, die mit Dichte- bzw. Volumenänderungen verknüpft sind, so daß es im Treib- bzw. Explosivstoff zu Spannungs- und Rißbildungen kommen kann. Zur Phasenstabilisierung von Ammoniumnitrat sind Zusätze unterschiedlicher Art vorgeschlagen worden, wobei sich insbesondere Metall-Amminkomplexe und hierunter vornehmlich Amminkomplexe von Cu, Ni und Zn bewährt haben (DE-A-17 67 757, 21 25 755 und 36 42 850).

Durch Aufschmelzen einer Mischung von Ammoniumnitrat und Metalloxid gelingt es, den Amminkomplex in das AN-Gitter einzubauen und auf diese Weise ein phasenstabilisiertes Ammoniumnitrat zu erhalten. Dabei kann so vorgegangen werden (DE-A-21 25 755), daß Ammoniumnitrat mit bis zu 10 % des Metalloxids gemischt und aufgeschmolzen und dann die Schmelze in den festen Zustand überführt wird. Dieses Verfahren hat den Nachteil, daß der Diamminkomplex nur unzureichend in das AN-Gitter eingebaut wird. Der Grund liegt in erster Linie darin, daß sich die Umsetzung von Metalloxid und AN sehr langsam vollzieht und der Diamminkomplex sich bei erhöhter Temperatur, nämlich der Schmelztemperatur von Ammoniumnitrat, zersetzt. Bildungshäufigkeit und gleichzeitige Zersetzung stehen also in Konkurrenz miteinander. Dieses Verfahren führt daher zu keinen befriedigenden Ergebnissen.

Bei einem anderen bekannten Verfahren (DE-A-36 42 850) wird der Diamminkomplex von Ni bzw. Cu auf dem Umweg über einen Tetramminkomplex wie folgt gebildet:

$$Ni\,(NO_3)_2 + Ni\,(NH_3)_4\,(NO_3)_2 \rightarrow 2\,Ni\,(NH_3)_2\,(NO_3)_2$$

Der hierzu benötigte Tetramminkomplex muß zuvor in wässriger Lösung aus Nickelsalz und Ammoniak hergestellt werden.

Dieser Schritt ist durch das Fällen, Absaugen und Trocknen des Komplexes arbeitsaufwendig. Hinzu kommt die notwendige Aufarbeitung bzw. umweltverträgliche Beseitigung der Restlösung mit dem Schwermetallsalz. Der Diamminkomplex wird dann mit festem Ammoniumnitrat und Metallnitrat gemischt, die Mischung aufgeschmolzen und anschließend beispielsweise zerstäubt. Hierfür darf nur wasserfreies Metallnitrat verwendet werden. Aufgrund seiner Hygroskopie zieht es jedoch während des Zudosierens wieder Wasser an und neigt zum Klumpen.

Der Erfindung liegt die Aufgabe zugrunde, ein Verfahren vorzuschlagen, bei dem einerseits der Umweg über eine flüssige Phase zur Herstellung des Diamminkomplexes vermieden, andererseits die Zersetzung des Diamminkomplexes zumindest weitestgehend reduziert wird.

Ausgehend von dem eingangs genannten Verfahren wird diese Aufgabe dadurch gelöst, daß der Diamminkomplex in einer Festkörperreaktion von CuO oder $Ni_2\,O_3$ mit AN bei 110 bis 170 Grad Celsius hergestellt wird.

Es hat sich überraschenderweise gezeigt, daß der Diamminkomplex in einer Festkörperreaktion präparativ hergestellt werden kann, indem die Mischung aus AN und Metalloxid bei einer Temperatur von 110 bis 170 Grad Celsius für eine bestimmte Zeit in Kontakt gehalten wird. Dies kann beispielsweise in einem Drehrohrofen geschehen und ist insbesondere in kontinuierlicher Weise möglich. Das Cu (II) diffundiert in das AN-Gitter ein, wobei der Diamminkomplex unter Abspaltung von $H_2O$ gebildet wird. Es kann dann der Diamminkomplex dem weiteren Ammoniumnitrat zugegeben, die Mischung aufgeschmolzen, homogenisiert und in den festen Zustand überführt werden. Es ist jedoch statt dessen auch möglich, die Festkörperreaktion mit einem entsprechenden Überschuß an Ammoniumnitrat durchzuführen und nach der für die Diaminkomplex-Bildung notwendigen Kontaktzeit die Temperatur auf die Schmelztemperatur anzuheben. Hierbei findet keine oder allenfalls eine nur minimale Zersetzung des Diamminkomplexes statt.

Gemäß einem weiteren Lösungsgedanken läßt sich die Erfindungsaufgabe auch unter vollständiger Vermeidung eines Schmelzprozesses lösen, indem der Diamminkomplex in einer Festkörperreaktion von AN und CuO oder $Ni_2\,O_3$ bei 110 bis 170 Grad Celsius hergestellt und mit einem Anteil bis zu 10 % in einer Mischung mit weiterem AN bei einer Temperatur zwischen 80 und 170 Grad Celsius in das AN-Gitter eingebaut wird.

Mit dieser erfindungsgemäßen Lösung erfolgt also nicht nur die Herstellung des Diamminkomplexes, sondern des gesamten phasenstabilisierten Ammoniumnitrates ausschließlich durch Festkörperreaktionen bei Temperaturen unterhalb des Schmelzpunktes des Ammoniumnitrates, indem aus Ammoniumnitrat und Metalloxid der Diaminkomplex gebildet und dieser bei im wesentlichen gleicher Temperatur in das AN-Gitter eingebaut wird.

Dieses Verfahren kann zweistufig - Herstellung des Diamminkomplexes und anschließender Einbau in das AN-Gitter oder einstufig durchgeführt werden, indem mit entsprechendem AN-Überschuß gearbeitet wird.

Beide erfindungsgemäßen Verfahren gestatten gegenüber der bisherigen Arbeitsweise eine kontinuierliche Herstellung, die sich insbesondere auch im industriellen Maßstab durchführen läßt.

Der Diamminkomplex kann relativ rein aus AN und CuO oder $Ni_2 O_3$ im stöchiometrischen molaren Verhältnis 2:1 hergestellt und anschließend dem weiteren AN kontiunierlich zugemischt werden.

Statt dessen ist es, wie bereits angedeutet, möglich, den Diamminkomplex in einer Mischung aus AN und CuO oder $Ni_2 O_3$ mit einem AN-Überschuß bis zu einem molaren Verhältnis von 8:1 herzustellen und unmittelbar in das AN-Gitter einzubauen und auf die beschriebene Art und Weise weiterzuverarbeiten. Der nach der Reaktion verbleibende Rest von AN behindert die Weiterverarbeitung nicht, weil ohnehin weiteres AN eingemischt wird. Die Verfahrensweise führt dazu, daß sich das Metalloxid leichter vollständig umsetzt.

Nachfolgend sind einige Ausführungsbeispiele wiedergegeben:

**Beispiel 1**

Ammoniumnitrat, hergestellt aus der Schmelze, phasenstabilisiert mit Diammin-Ni (II), (3 % $Ni_2 O_3$).

0,75 kg $Ni_2 O_3$ werden mit 2,9 kg AN - der doppelten stöchiometrischen Menge - vermischt und 2,5 h lang im Trockenschrank bei 120 Grad Celsius gehalten. Das Produkt, das neben nicht umgesetztem AN den gebildeten Diammin-Nickel-Komplex enthält, wird mit weiteren 21,35 kg AN vermischt und aufgeschmolzen. Die Schmelze von 180 Grad Celsius wird sofort durch Versprühen in den festen Zustand überführt.

**Beispiel 2**

Ammoniumnitrat (AN), hergestellt aus der Schmelze, phasenstabilisiert mit Diammin-Cu (II) (3 % CuO).

0,75 kg CuO werden mi 3 kg AN - der doppelten stöchiometrischen Menge - vermischt und 2 h lang bei 130 Grad Celsius im Trockenschrank gehalten. Das Produkt, das neben nicht umgesetztem AN Diammin-Kupfernitrat enthält, wird mit weiteren 21,25 kg AN aufgeschmolzen, und die Schmelze von 180 Grad Celsius wird unmittelbar nach dem Aufschmelzen durch Versprühen in den festen Zustand überführt.

**Beispiel 3**

Ammoniumnitrat, phasenstabilisiert durch Diammin-Cu (II) (3 %), hergestellt nur durch Festkörperreaktion.

60 g CuO werden mit 1,94 kg AN vermischt und im Trockenschrank 2,5 h auf 130 Grad Celsius gehalten. Das Produkt wird nach dem Abkühlen zerkleinert. Es besitzt die Eigenschaften phasenstabilisierten Ammoniumnitrats.

**Patentansprüche**

1. Verfahren zur Herstellung von phasenstabilisiertem Ammoniumnitrat (AN) durch Einbau eines Diamminkomplexes von Ni oder Cu in das AN-Gitter, wobei der Diamminkomplex durch Umsetzen des Metalloxids mit AN erhalten, mit einem Anteil bis 10 % mit weiterem AN gemischt und aufgeschmolzen, homogenisiert und anschließend in den festen Zustand überführt wird, dadurch gekennzeichnet, daß der Diamminkomplex in einer Festkörperreaktion von CuO oder $Ni_2 O_3$ und AN bei einer Temperatur von 110 bis 170 Grad Celsius hergestellt wird.

2. Verfahren zur Herstellung von phasenstabilisiertem Ammoniumnitrat (AN) durch Einbau eines Diamminkomplexes aus Ni oder Cu in das AN-Gitter, wobei der Diamminkomplex durch Umsetzen des Metalloxids mit AN erhalten wird, dadurch gekennzeichnet, daß der Diamminkomplex in einer Festkörperreaktion von AN und CuO oder $Ni_2 O_3$ bei 110 bis 170 Grad Celsius hergestellt und mit einem Anteil bis zu 10 % in einer Mischung mit weiterem AN bei einer Temperatur zwischen 80 und 170 Grad Celsius in das AN-Gitter eingebaut wird.

3. Verfahren nach Anspruch 1 oder 2, dadurch gekennzeichnet, daß der Diamminkomplex aus AN und CuO oder $Ni_2 O_3$ im stöchiometrischen molaren Verhältnis 2:1 hergestellt und anschließend dem weiteren AN kontinuierlich zugemischt wird.

4. Verfahren nach Anspruch 1 oder 2, dadurch gekennzeichnet, daß der Diamminkomplex in einer Mischung aus AN und CuO oder $Ni_2 O_3$ mit einem AN-Überschuß bis zu einem molaren Verhältnis von 8:1 hergestellt wird.

5. Verfahren nach einem der Ansprüche 1 bis 4, dadurch gekennzeichnet, daß die Herstellung des Diamminkomplexes, das Zudosieren zum AN und der Einbau in das AN-Gitter zum phasenstabilisierten AN kontinuierlich durchgeführt wird.

6. Verfahren nach einem der Ansprüche 2 bis 4, dadurch gekennzeichnet, daß CuO oder $Ni_2 O_3$ mit der gesamten Menge AN gemischt, der Diamminkomplex durch Erhitzen der Mischung auf 110 bis 170 Grad Celsius erzeugt und unmittelbar in das AN-Gitter eingebaut wird.

**Claims**

1. Process for producing phase-stabilized ammonium nitrate (AN) by incorporating a diamine com-

plex of Ni or Cu into the AN lattice, the diammine complex being obtained by reacting the metal oxide with AN, mixed with a proportion of up to 10% with further AN and melted on, homogenized and subsequently transferred into the solid state, characterized in that the diammine complex is produced in a steady-state reaction of CuO or $Ni_2O_3$ and AN at a temperature of 110 to 170°C.

2. Process for producing phase-stabilized ammonium nitrate (AN) by incorporating a diammine complex of Ni or Cu into the AN lattice, in which the diammine complex is obtained by reacting the metal oxide with AN, characterized in that the diammine complex is produced in a solid-state reaction of AN and CuO or $Ni_2O_3$ at 110 to 170°C and is incorporated into the AN lattice with a proportion of up to 10% in a mixture with further AN at a temperature between 80 and 170°C.

3. Process according to claims 1 or 2, characterized in that the diammine complex is prepared from AN and CuO or $Ni_2O_3$ in a stoichiometric molar ratio of 2:1 and is subsequently continuously admixed with the further AN.

4. Process according to claims 1 or 2, characterized in that the diammine complex is produced in a mixture of AN and CuO or $Ni_2O_3$ with an AN excess up to a molar ratio of 8:1.

5. Process according to one of the claims 1 to 4, characterized in that the production of the diammine complex, the dosing in to AN and the incorporation into the AN lattice to phase-stabilized AN are carried out continuously.

6. Process according to one of the claims 2 to 4, characterized in that CuO or $Ni_2O_3$ is mixed with the total AN quantity, the diammine complex is produced by heating the mixture to 110 to 170°C and immediate incorporation into the AN lattice.

**Revendications**

1. Procédé de préparation de nitrate d'ammonium (AN) à phase stabilisée par incorporation d'un complexe de diammine de Ni ou de Cu dans le réseau de AN, dans lequel le complexe de diammine est obtenu par réaction de l'oxyde métallique avec du AN, est mélangé et fondu dans une proportion allant jusqu'à 10% avec du AN supplémentaire, est homogénéisé et ensuite transformé à l'état solide, caractérisé en ce que le complexe de diammine est préparé dans une réaction en phase solide de CuO ou de $Ni_2O_3$ et de AN à une température de 110 à 170° Celsius.

2. Procédé de préparation de nitrate d'ammonium (AN) à phase stabilisée par incorporation d'un complexe de diammine de Ni ou de Cu dans le réseau de AN, dans lequel le complexe de diammine est obtenu par réaction de l'oxyde métallique avec du AN, caractérisé en ce que le complexe de diammine est préparé dans une réaction en phase solide de AN et de CuO ou de $Ni_2O_3$ à une température de 110 à 170 ° Celsius et est incorporé dans le réseau de AN, en proportion allant jusqu'à 10% dans un mélange avec du AN supplémentaire, à une température comprise entre 80 et 170 ° Celsius.

3. Procédé selon la revendication 1 ou 2, caractérisé en ce que le complexe de diammine de AN et de CuO ou de $Ni_2O_3$ est préparé dans un rapport stoechiométrique molaire de 2:1 et est ensuite mélangé en continu avec le AN supplémentaire.

4. Procédé selon la revendication 1 ou 2, caractérisé en ce que le complexe de diammine est préparé dans un mélange de AN et de CuO ou de $Ni_2O_3$ avec un excédent de AN jusqu'à un rapport molaire de 8:1.

5. Procédé selon l'une des revendications 1 à 4, caractérisé en ce que la préparation du complexe de diammine, l'addition au AN et l'incorporation dans le réseau de AN pour fournir le AN à phase stabilisée sont effectués de façon continue.

6. Procédé selon l'une des revendications 2 à 4, caractérisé en ce que du CuO ou du $Ni_2O_3$ est mélangé avec la quantité totale de AN, le complexe de diammine est produit par chauffage du mélange à température de 110 à 170° Celsius et est incorporé directement dans le réseau de AN.